# EUROPÄISCHE PATENTSCHRIFT

(11) **EP 1 070 820 B1**
(45) Veröffentlichungstag und Bekanntmachung des Hinweises auf die Patenterteilung: **16.04.2003**
(21) Anmeldenummer: 00110449.6
(22) Anmeldetag: 16.05.2000
(51) Int. Cl.: E06B 3/10, E06B 3/263, E06B 3/30

(54) **Fenster**
Window
Fenêtre

(30) Priorität: 23.07.1999 DE 29912923 U
(43) Veröffentlichungstag der Anmeldung: 24.01.2001
(73) Patentinhaber: Freisinger Bau- und Möbeltischlerei Ges.mbH & Co. KG, 6341 Ebbs (AT)
(72) Erfinder: Freundorfer, Franz, 83080 Oberaudorf (DE)
(74) Vertreter: Kuhnen & Wacker

(56) Entgegenhaltungen:
- EP-A- 0 893 566

## Beschreibung

Die Erfindung betrifft ein Fenster mit einem Rahmen und einer Verglasung, wobei der Rahmen einen Rahmenkörper und eine Rahmenblende aufweist, welche demontierbar am Rahmenkörper befestigt ist. Insbesondere betrifft die Erfindung auch ein Fenster mit wenigstens einem Flügel mit Verglasung, wobei der wenigstens eine Flügel einen Flügelrahmen und eine demontierbar daran befestigte Flügelblende aufweist.

Derartige Fensteranordnungen sind bereits aus der EP 893 566 A2 bekannt, welche sich auf eine Holzblende für ein Holzfenster bezieht. Bei diesem bekannten Fenster wird der Rahmen bzw. gegebenenfalls der Flügel in jeweils zwei Komponenten aufgeteilt, nämlich einem funktionellen Stützteil in Gestalt des Rahmenkörpers bzw. des Flügelrahmens und einem der Witterung ausgesetzten Verschleißteil, nämlich der Rahmenblende bzw. der Flügelblende. Dabei ist eine Demontage dieser Blenden für Instandhaltungszwecke auf einfache Weise mittels Drehverbindern möglich. Die Blenden können somit abgenommen und separat in einer Werkstätte ausgebessert oder gänzlich ersetzt werden. Damit liegt hier ein weitestgehend aus Holz bestehendes Fenster vor, bei dem trotz der naturgemäßen Substanzverschlechterung durch Witterungseinflüsse der Instandhaltungsaufwand gering gehalten werden kann.

Dieses hinsichtlich der Materialwahl sowohl aus ökologischer Sicht als auch der raumklimatischen Eigenschaften sehr vorteilhafte Fenster hat sich jedoch noch nicht als besonders geeignet für die Erfüllung höherer Anforderungen an die Dämmeigenschaften wie zum Beispiel bei einem Niedrigenergiehaus oder einem Passivhaus gezeigt.

Ferner sind Fenster bekannt, welche über eine zusätzliche Dämmung im Rahmen verfügen. Hierbei handelt es sich in der Regel um Kunststoff- oder Aluminiumfenster, welche Hohlprofile als Rahmenteile aufweisen. In diesen Hohlräumen kann eine Dämmung aus Polyurethanschaum u.ä. eingebracht werden. Diese Bauweise ist jedoch an einem Holzfenster kaum realisierbar, da die Hohlräume zur Aufnahme der Dämmung nur mit größerem Aufwand herstellbar sind. Ferner wäre eine derartige Bauweise der Gesamtstabilität des Fensters abträglich. Einer Aufbringung der Dämmung auf der Außen- oder Innenseite eines derartigen Holzfensters steht zudem entgegen, daß dies das Erscheinungsbild und die Dauerhaftigkeit des Fensters beeinträchtigen würde.

Der Erfindung liegt daher die Aufgabe zugrunde, ein Fenster bereitzustellen, welches bei freier Materialwahl für die Fensterelemente verbesserte Wärmedämmeigenschaften aufweist und dabei mit geringem Aufwand instandhaltbar ist.

Diese Aufgabe wird durch ein Fenster mit den Merkmalen des Anspruches 1 bzw. insbesondere auch des Anspruches 2 gelöst.

Dementsprechend sieht die Erfindung gemäß Anspruch 1 vor, daß ein Fenster mit demontierbarer Rahmenblende derart weitergebildet wird, daß zwischen dem Rahmenkörper und der Rahmenblende eine Dämmung angeordnet ist, wobei die Rahmenblende auf einer Mehrzahl von Rahmenstelzen sitzt, welche die Dämmung durchgreifen und sich am Rahmenkörper abstützen.

Erfindungsgemäß wurde somit erstmals erkannt, daß die demontierbar am Rahmenkörper angekoppelte Rahmenblende auch derart beabstandet angeordnet werden kann, daß ein Freiraum zur Aufnahme einer Dämmung entsteht. Dem Erfordernis, der Rahmenblende eine ausreichende Lagestabilität zu verleihen, damit gegebenenfalls auch eine Verglasung durch diese gehalten werden kann, wird durch die Abstützung mittels Rahmenstelzen Rechnung getragen. Es wird erfindungsgemäß somit ein Fenster bereitgestellt, bei dem der Instandhaltungsaufwand durch die demontierbare Blende gering gehalten wird und gleichzeitig ein verbessertes Wärmedämmverhalten erzielbar ist. Somit steht ein dauerhaftes, zuverlässiges und auch für eine Passivhausbauweise geeignetes Fenster zur Verfügung.

Wenn das Fenster gemäß Anspruch 2 ergänzend oder alternativ wenigstens einen Flügel mit Verglasung aufweist, lassen sich die erfindungsgemäßen Vorteile gleichermaßen erzielen. Hierbei weist der wenigstens eine Flügel vorzugsweise einen Flügelrahmen und eine demontierbar daran befestigte Flügelblende auf, wobei zwischen dem Flügelrahmen und der Flügelblende eine Dämmung angeordnet ist. Dabei sitzt die Flügelblende auf einer Mehrzahl von Flügelstelzen, welche die Dämmung durchgreifen und sich am Flügelrahmen abstützen. Auf diese Weise läßt sich das Dämmungsverhalten des Fensters weiter verbessern. Insbesondere wird es somit auch möglich, einen Fensterflügel noch besser zu dämmen, wobei hier auf das gleiche Grundprinzip wie beim Rahmen zurückgegriffen wird.

Von besonderem Vorteil ist hierbei, daß die erfindungsgemäße Dämmweise unabhängig vom gewählten Material für den Rahmen oder den Flügel realisiert werden kann. Somit kann auch ein Holzfenster so ausgebildet werden, daß es hohen Anforderungen hinsichtlich der Wärmedämmung genügen kann.

Dabei zeichnet sich das erfindungsgemäße Fenster ferner durch eine einfache Bauweise mit wenigen und konstruktiv einfach gestalteten Bauteilen und zudem durch einen geringen Montageaufwand aus.

Durch die Merkmalskombinationen der Ansprüche 1 und 2 wird zudem deutlich, daß sich die erfindungsgemäße "Stelzenanordnung" sowohl alleine am Rahmen bzw. alleine am Flügel oder auch gegebenenfalls an beiden Elementen realisieren läßt. Damit wird ein vielseitig verwendbares Fenster bereitgestellt, das hinsichtlich seiner Dämmeigenschaften neuesten Anforderungen genügt und dabei weiterhin einen geringen Instandhaltungsaufwand durch die abnehmbaren Blenden ermöglicht.

Vorteilhafte Weiterbildungen der Erfindung ergeben sich aus den Merkmalen der Unteransprüche.

So ist es zum Beispiel von Vorteil, wenn die Verglasung durch einen Haltebund an den Rahmen- bzw. Flügelstelzen festlegbar ist. Damit kann die Verglasung noch zuverlässiger befestigt werden, da über die Stelzen eine wirksamere Krafteinbringung möglich ist, als über den Umweg mit den Blenden. Die Zuverlässigkeit der Fensteranordnung erhöht sich dadurch weiter. Ferner kann auf zusätzliche Glashalter verzichtet werden.

Wenn die Rahmen- bzw. Flügelstelzen zur Festlegung der Dämmung dienen, kann auf andere Befestigungsmittel wie Nägel, Schrauben oder auch Klebstoffe verzichtet werden. Die Dämmung kann dann im Gegensatz zum Stand der Technik durch reine Klemmung festgelegt werden, was das Recycling des erfindungsgemäßen Fensters wesentlich vereinfacht. Der Aufbau und die Montage des erfindungsgemäßen Fensters vereinfachen sich zudem weiter.

Dadurch, daß blendenseitig auf den Rahmen- bzw. Flügelstelzen Drehverbinder zur Ankopplung der Rahmen- bzw. Flügelblende angeordnet sind, wobei die Drehverbinder und die Rahmen- bzw. Flügelstelzen mittels einem gemeinsamen Verbindungselement, insbesondere einer Schraube, am Rahmenkörper bzw. Flügelrahmen befestigt sind, läßt sich die Montage der Fensteranordnung weiter vereinfachen. So ist es damit möglich, die Drehverbinder und die Stelzen in einem Zuge festzulegen, was zudem die Stabilität der Anordnung erhöht.

Vom weiteren Vorteil ist es, wenn der Rahmenkörper bzw. Flügelrahmen eine Nut aufweist, in welche die Rahmen- bzw. Flügelstelzen eingreifen. Damit verringert sich der Justieraufwand für die Positionierung der Stelzen wesentlich. Dies ist insbesondere bei jenen Stelzen von Bedeutung, welche zum Halten der Verglasung dienen. Damit läßt sich eine hohe Qualität des erfindungsgemäßen Fensters hinsichtlich der Maßgenauigkeit und der Dämmeigenschaften z.B. durch die Vermeidung von Kältebrücken sicherstellen. Zudem verringert sich der Montageaufwand wesentlich.

Dadurch, daß der Rahmenkörper bzw. Flügelrahmen aus Holz und die Rahmen- bzw. Flügelblende aus Holz, Aluminium oder Kunststoff ausgebildet ist, kann ein vielseitiges Fenster bereitgestellt werden, welches sich zum Innenraum des Gebäudes hin durch die Behaglichkeit einer Holzbauweise und zur Außenseite hin durch ein witterungsbeständiges und/oder gut instandhaltbares Blendenteil auszeichnet. Insbesondere ist es damit auch möglich, weiterhin eine reine Holzbauweise bereitszustellen.

Vom weiteren Vorteil ist es, wenn die Dämmung im wesentlichen aus einem Holzmaterial wie Kork, Balsaholz oder Holzfasern besteht. Damit kann ein Fenster bereitgestellt werden, welches sozusagen aus drei Holzmaterialschichten besteht, was einer ökologischen Bauweise dienlich ist. Da die Dämmung zudem keine tragende Funktion für andere Bauteile entfalten muß, kann sie mit niedrigen Dichten und somit hoher Dämmwirkung bereitgestellt werden. Daher kann bei einer Dämmung mit einem Holzwerkstoff zum Beispiel auch eine Passivhaus-Bauweise realisiert werden.

Vorteilhaft ist es ferner, wenn auf der der Verglasung abgewandten Seite der Rahmen- bzw. Flügelstelze ein Stabilisator angeordnet ist, dessen Längserstreckung etwas größer als der durch die Rahmen- bzw. Flügelstelze vorgegebene wirksame Abstand zwischen dem Rahmenkörper bzw. Flügelrahmen und der Rahmen- bzw. Flügelblende ist. Damit wird erreicht, daß die Rahmen- bzw. Flügelblende gegen die Verglasung um den durch den Drehverbinder gebildeten Schwenkpunkt vorgespannt wird. Die Verglasung kann damit noch zuverlässiger gehalten werden. Ferner erhöht sich dadurch die Dichtwirkung des Dichtelements zwischen der Blende und der Verglasung.

Die Erfindung wird nachfolgend in Ausführungsbeispielen anhand der Figuren der Zeichnung näher erläutert. Es zeigt:
- Fig. 1: eine Schnittansicht durch einen Rahmen bzw. Flügel eines erfindungsgemäßen Fensters im seitlichen bzw. oberen Bereich des Fensterrahmens;
- Fig.2: eine Vorderansicht einer Stelze;
- Fig. 3: eine Draufsicht auf die Stelze gemäß Fig. 2;
- Fig. 4: eine ähnliche Darstellung wie in Fig. 1, wobei der Schnitt an einer anderen Stelle vorgenommen ist, an der ein Stabilisator angeordnet ist;
- Fig. 5: eine Schnittansicht durch einen Rahmen eines flügellosen Fensters im seitlichen bzw. oberen Bereich des Fensterrahmens;
- Fig. 6: eine Schnittansicht durch den unteren Bereich des in Fig. 1 gezeigten Fensters;
- Fig.7: eine Schnittdarstellung ähnlich der in Fig. 6 mit einer weiteren Ausgestaltungsvariante der Rahmenblende;
- Fig. 8: eine Schnittansicht eines Fensters mit Rahmenanschlag;
- Fig. 9: eine Schnittansicht einer weiteren Ausführungsform der vorliegenden Erfindung mit Metallblenden;
- Fig. 10: eine Schnittansicht einer weiteren Ausführungsform des erfindungsgemäßen Fensters, in das die Verglasung fest aufgenommen und bei dem die Rahmenblende aus Metall ausgebildet ist; und
- Fig. 11: eine Schnittansicht durch eine Fensteranordnung mit zwei Fensterflügel.

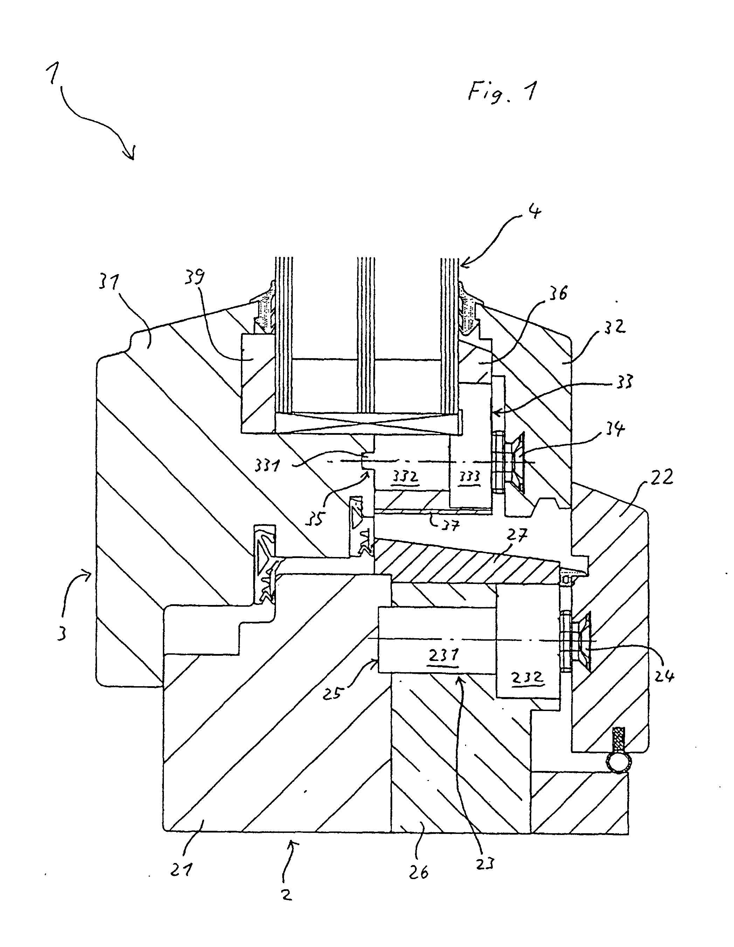

Gemäß der Darstellung in Fig. 1 weist ein Fenster 1 einen Rahmen 2 und einen Flügel 3 mit einer Verglasung 4 auf.

Der Rahmen 2 enthält einen Rahmenkörper 21 und eine Rahmenblende 22, wobei die Rahmenblende 22 mittels einer Mehrzahl von zueinander beabstandeten Rahmenstelzen 23 und jeweils einem Drehverbinder 24 demontierbar am Rahmenkörper 21 festgelegt ist. Hierzu ist durch den Drehverbinder 24 und die Stelze 23 jeweils eine Schraube derart eingebracht, daß diese am Rahmenkörper 21 befestigt sind, wobei der Drehverbinder 24 jedoch verdrehbar bleibt.

Die Rahmenstelze 23 greift, wie in Fig. 1 dargestellt ist, in eine Nut 25 am Rahmenkörper 21 ein und ist somit hinsichtlich ihrer Lage in Querrichtung zur Fenstergroßfläche justiert. Die Rahmenstelze 23 ist zylinderförmig mit einem Schaftabschnitt 231 und einem Haltebund 232 ausgebildet. Mit diesem Haltebund 232 hält die Rahmenstelze 23 ferner gleichzeitig eine Dämmung 26 am Rahmenkörper 21.

Die Dämmung 26 ist in dieser Ausführungsform aus einem Holzfaserelement gebildet. Zur offenen Seite hin ist an der Dämmung 26 zudem ein Holzanleimer 27 als Schutz gegen ein Eindringen von Verunreinigungen, Feuchtigkeit, oder eine Beschädigung der Dämmung angeordnet. Zudem verbessert der Holzanleimer das optische Erscheinungsbild der Anordnung. Ferner sind wie üblich verschiedene Dichtelemente vorgesehen, um die Anordnung abzudichten und vor äußeren Einflüssen zu schützen.

Der Flügel 3 weist einen Flügelrahmen 31 und eine Flügelblende 32 auf, wobei die Flügelblende 32 mittels einer Mehrzahl von zueinander beabstandeten Flügelstelzen 33 und jeweils einem Drehverbinder 34 demontierbar am Flügelrahmen 31 befestigt ist. Gleichermaßen wie beim Rahmen sind der Drehverbinder 34 und die Flügelstelze 33 jeweils durch eine hindurchgreifende Schraube am Flügelrahmen 31 angeschraubt.

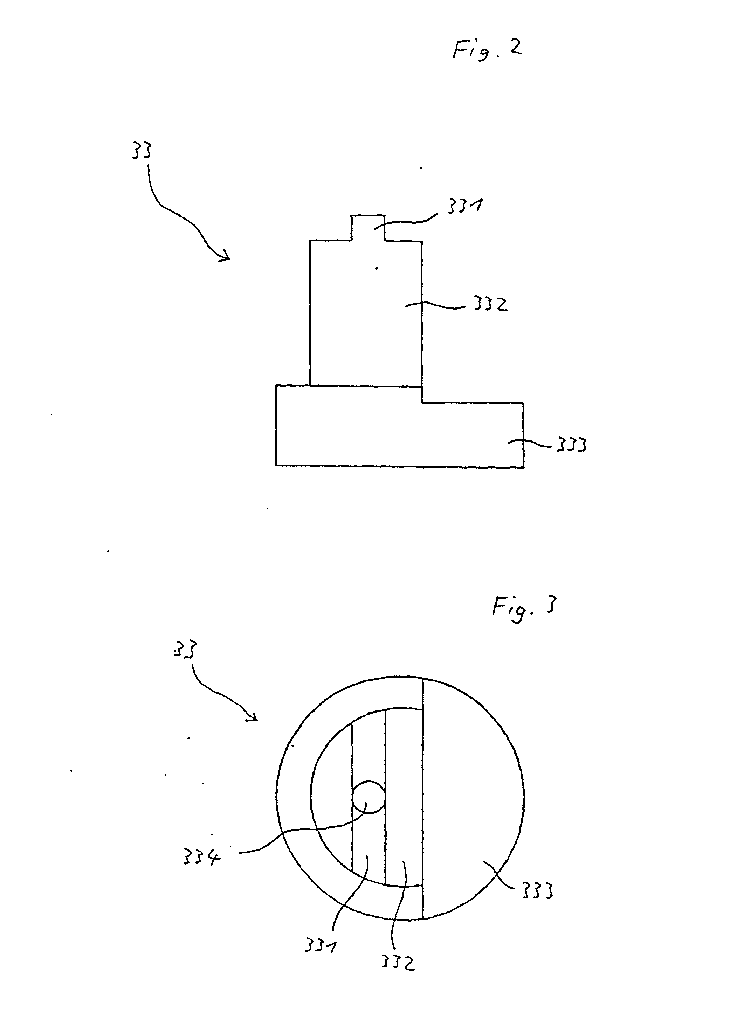

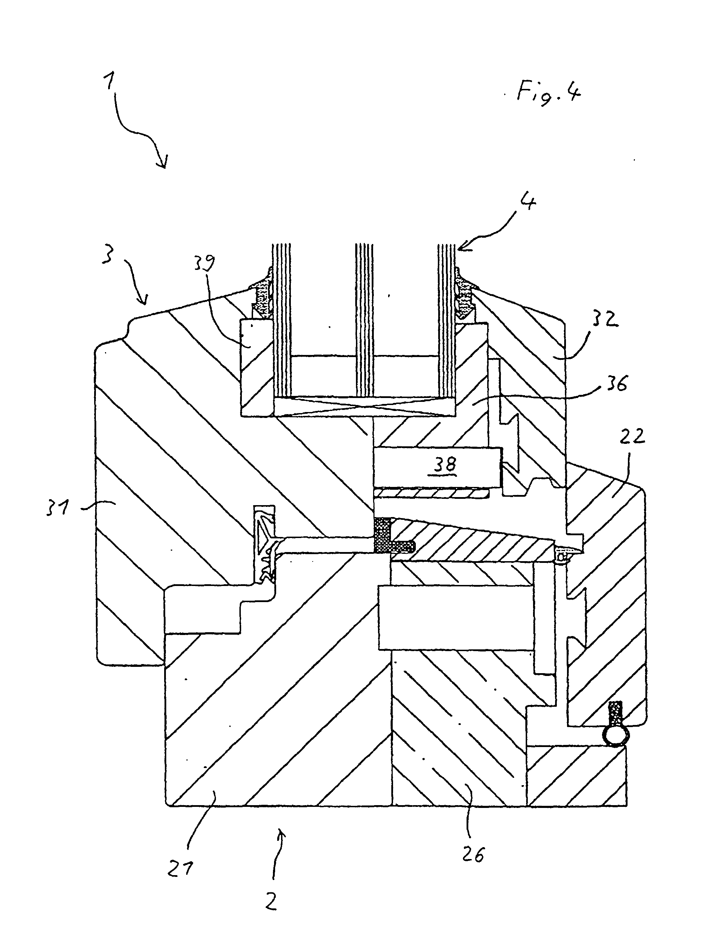

Wie insbesondere aus den Fig. 2 und 3 erkennbar ist, weist die Flügelstelze 33 hierzu einen länglichen Vorsprung 331 auf, der in eine Nut 35 am Flügelrahmen 31 derart eingreift, daß die Flügelstelze 33 fixiert und hinsichtlich ihrer Lage in Querrichtung zur Verglasung 4 justiert ist. Ferner weist die Flügelstelze 33 einen Schaftabschnitt 332 und einen Haltebund 333 auf, wobei diese auf einer Seite derart ausgespart sind, daß die Verglasung 4 aufgenommen und gehalten werden kann. Damit können die ggf. auf das Fenster 1 einwirkenden Sog- bzw. Drucklasten zuverlässig aufgenommen werden.

Aus Fig. 3 ist ferner erkennbar, daß im zentralen Bereich des Vorsprungs 331 ein Durchgangsloch 334 ausgebildet ist, durch welches die Befestigungsschraube hindurchgreift. Ein entsprechendes Durchgangsloch ist auch in der Rahmenstelze 23 vorgesehen, obwohl es hier nicht dargestellt ist.

Durch den Haltebund 333 der Flügelstelze 33 wird ferner eine Dämmung 36 aus Holzfasermaterial gehalten. Auch die Dämmung 36 weist einen Holzanleimer 37 zum Schutz vor äußeren Einflüssen auf.

Sowohl die Rahmenstelze 23 als auch die Flügelstelze 33 ist mehrfach auf jeder Seite rund um das Fenster 1 vorgesehen. Die einzelnen Rahmenstelzen 23 bzw. Flügelstelzen 33 können dabei zum Beispiel in einem Abstand von 20 bis 30 cm zueinander angeordnet sein.

Die Drehverbinder 24 bzw. 34 sind so gestaltet, daß sie bei entsprechender Drehstellung in einer an sich bekannten Weise formschlüssig in eine Schwalbschwanznut der Rahmenblende 22 bzw. Flügelblende 32 eingreifen. Durch den Spalt zwischen der Blende und der jeweiligen Stelze kann dabei ein Werkzeug eingebracht werden, welches auf den Drehverbinder derart einwirken kann, daß dieser in seine Entriegelstellung drehbar ist. Dann können die Blenden 22 und 32 in an sich bekannter Weise abgenommen werden.

In dieser Ausführungsform sind für den Rahmenkörper 21, die Rahmenblende 22, die Dämmung 26, den Flügelrahmen 31, die Flügelblende 32 und die Dämmung 36 jeweils Holzwerkstoffe vorgesehen, so daß ein reines Holzfenster 1 bereitgestellt wird.

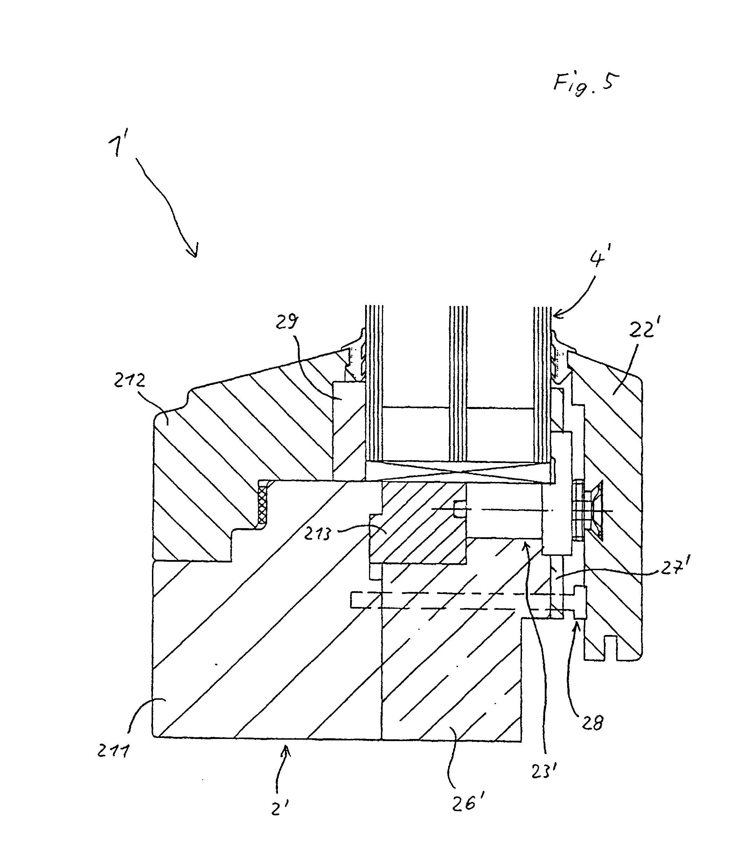

In Fig. 4 ist ein Schnitt durch einen anderen Bereich dargestellt, in welchem ein Stabilisator 38 angeordnet ist. Dieser Stabilisator 38 ist dabei auf der der Verglasung 4 abgewandten Seite der Flügelstelze 33 derart zwischen dem Flügelrahmen 31 und der Flügelblende 32 angeordnet, daß die Flügelblende 32 in ihrer montierten Stellung mit dem der Verglasung 4 naheliegenden Ende gegen die Verglasung 4 gedrückt wird. Somit wird eine Art Vorspannung um eine Schwenkachse aufgebracht, welche sich durch die Drehverbinder 34 erstreckt. Der Anpreßdruck der Flügelblende 32 über die Dichtung gegen die Verglasung 4 kann dabei durch Wahl eines geeigneten Stabilisators 38 in gewünschter Länge eingestellt werden. Somit kann die Verglasung 4 zuverlässig gehalten werden.

Ein derartiger Stabilisator 38 ist dabei zum Beispiel jeweils einmal mittig auf jeder Seite des Fensters 1 angeordnet, wobei er hinsichtlich seiner Lage in dieser Ausführungsform nicht mit einem Drehverbinder 34 zusammentrifft, sondern zwischen zwei Drehverbindern 34 angeordnet wird. Die Anzahl der angeordneten Stabilisatoren 38 kann jedoch auch größer sein und richtet sich nach den jeweiligen Stabilitätsanforderungen.

Gemäß der Darstellung in den Figuren ist ferner auf der Innenseite des Fensters zwischen dem Flügelrahmen 31 und der Verglasung 4 eine Dämmleiste 39 angeordnet, welche in erster Linie als zusätzliche Dämmung dient und aus Pavatex, Balsaholz, Kork oder dgl. ausgebildet ist. In der hier gezeigten Bauweise ragt die Verglasung 4 tiefer in den Flügelrahmen 31 hinein, als dies im Stand der Technik der Fall ist. Daher kann mit der Dämmung 36 und der Dämmleiste 39 eine beidseitige Dämmung der Verglasung vorgenommen werden, was die Dämmeigenschaften des Fensters 1 insgesamt verbessert.

Ferner ist die Verglasung 4 in der gezeigten Weise durch eine mechanische, nicht klebende Dichtung gegen den Flügelrahmen 31 bzw. die Flügelblende 32 abgedichtet.

In Fig. 5 ist eine weitere Ausführungsform eines Fensters 1' gezeigt, welches flügellos ausgebildet ist. Ein Rahmen 2' dieses Fensters 1' ist dabei im wesentlichen aus Rahmenteilen 211, 212 und 213 ausgebildet, welche im Zusammenwirken mit einer Rahmenblende 22' eine Verglasung 4' halten. Die Rahmenblende 22' ist hierbei in analoger Weise zu der Flügelblende 32 in der ersten Ausführungsform an den Rahmenteilen festgelegt. Hierzu ist eine Rahmenstelze 23' vorgesehen, deren Gestalt im wesentlichen der der Flügelstelze 33 in der ersten Ausführungsform entspricht. Ferner ist in analoger Weise auch eine Dämmleiste 29 aus Pavatex etc. auf der Innenseite des Fensters 1' vorgesehen, wie auch ein Stabilisator 28, der die gleiche Funktion wie der Stabilisator 38 in der ersten Ausführungsform ausübt. Eine Rahmendämmung 26' gemäß dieser Ausführungsform weist hierbei eine Außenschicht 27' auf, die z.B. aus Balsaholz und insbesondere aus einem stabileren Dämmwerkstoff als die Hauptdämmschicht der Rahmendämmung 26' ausgebildet ist.

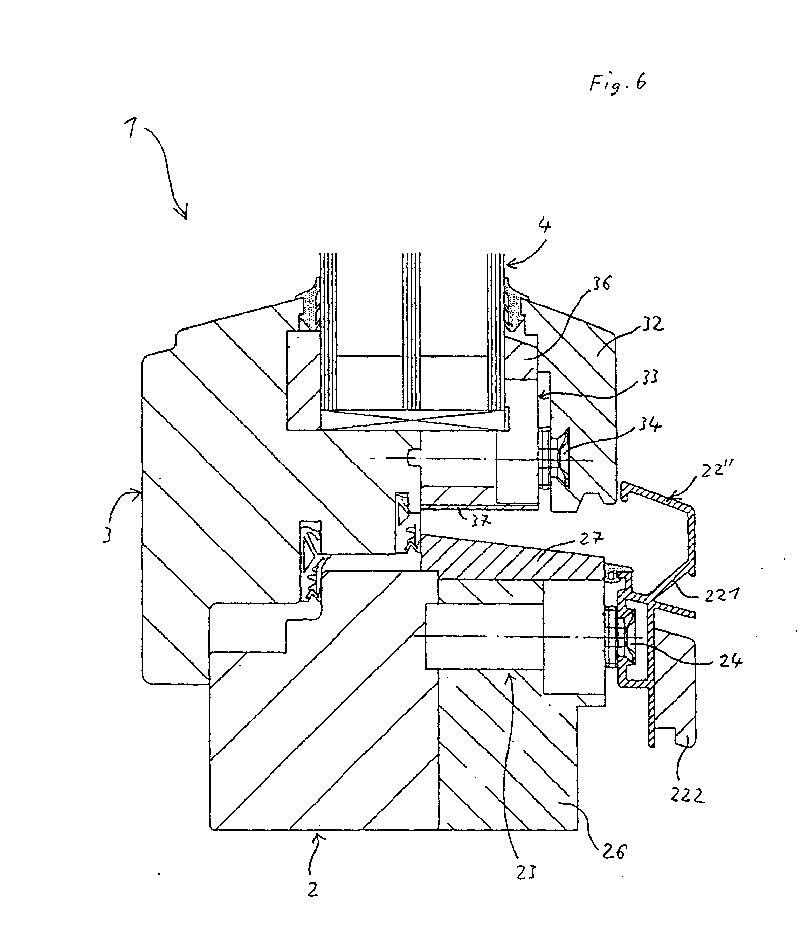

In Fig. 6 ist ein Schnitt durch einen unteren Bereich des Fensters 1 gemäß Fig. 1 dargestellt, wobei hier die Rahmenblende 22" zweiteilig aus einem Metallprofil 221 und einer Holzverkleidung 222 ausgebildet ist. Die Verwendung eines Metallprofils im unteren Bereich eines Fensters ist üblich, da dieser Bereich des Fensters besonders anfällig für Wasseransammlungen und somit für Verwitterungserscheinungen ist. Durch die Holzverkleidung 222 wird das äußere Erscheinungsbild des Fensters 1 jedoch an die sonstige Holzbauweise angepaßt.

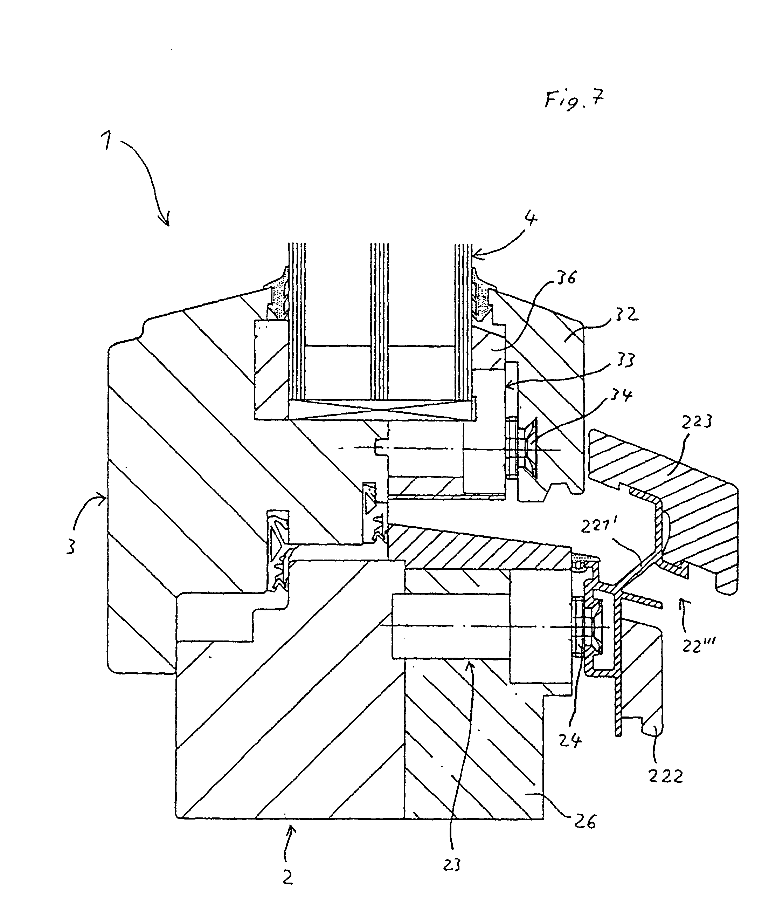

Gemäß der in Fig. 7 dargestellten Abwandlung des in Fig. 6 gezeigten Fensters 1 ist eine Rahmenblende 22''' mit einem anders gestalteten Metallprofil 221' versehen, an welchem ein weiteres Holzverkleidungselement 223 angeordnet ist. Insbesondere in dieser Ausführungsform kann die Rahmenblende trotz eines Tragelements in Gestalt des Metallprofils 221' optisch als Holzverblendung erscheinen. Die Metallprofile 221 bzw. 221' sind dabei vorzugsweise aus Aluminium ausgebildet, wobei auch auf andere Werkstoffe bzw. Legierungen zurückgegriffen werden kann.

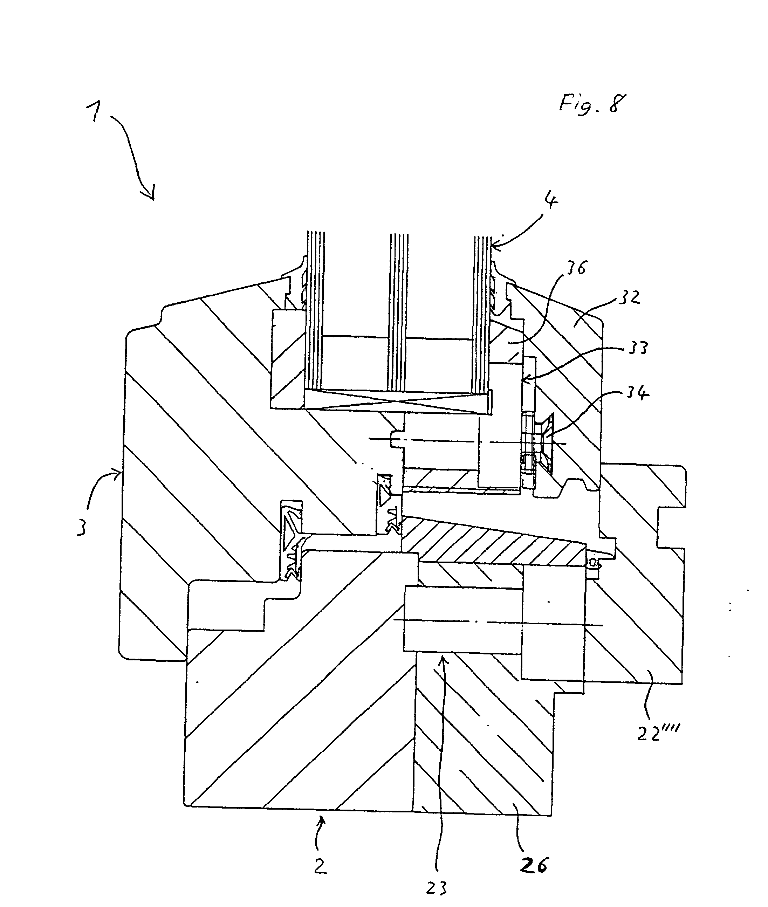

In Fig. 8 ist eine weitere Ausführungsform des Fensters 1 gezeigt, in der eine anders gestaltete Rahmenblende 22'''' als Anschlag für eventuelle senkrecht zur Fensterhauptebene auftreffende weitere Fenster- oder Wandelemente dienen kann. Diese Bauweise ist wärmetechnisch von besonderem Vorteil, da eine Kältebrücke im Bereich des Wandanschlusses durch eine Überdämmlösung vermieden werden kann. Daher ist diese Bauweise besonders gut für Passivhäuser geeignet. Wie in dieser Figur ferner angedeutet ist, kann diese Rahmenblende 22'''' auch fest über die Rahmenstelze 23 mit dem Rahmen 2 verschraubt sein.

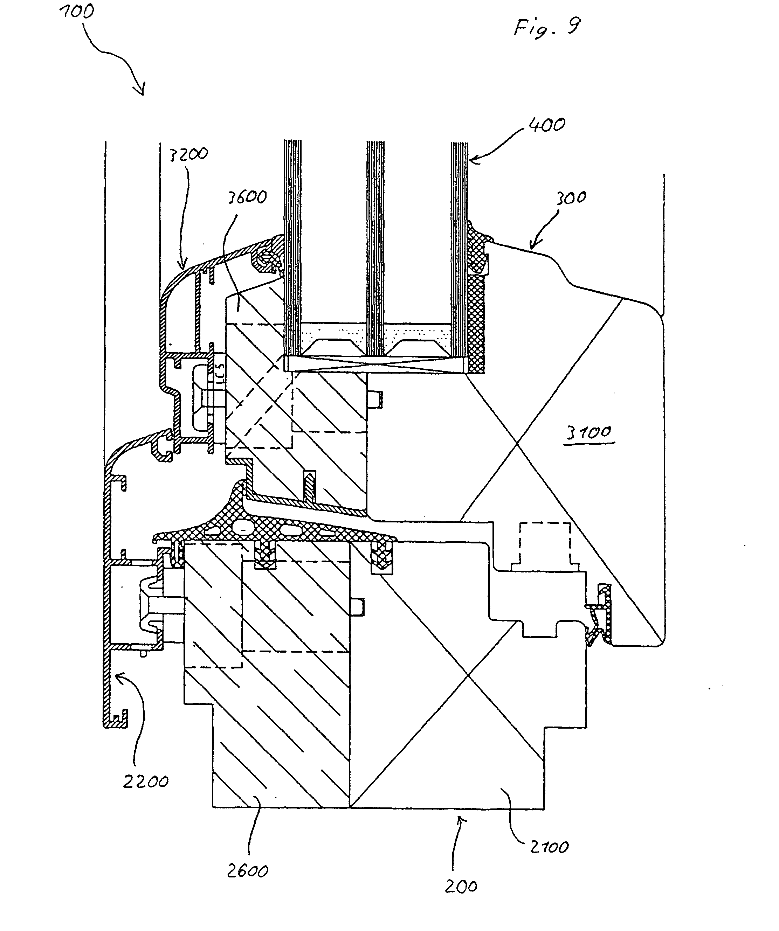

Eine weitere Ausführungsform der vorliegenden Erfindung ist zudem in Fig. 9 gezeigt. Ein Fenster 100 weist hier einen Rahmen 200 und einen Flügel 300 auf. Der Rahmen 200 enthält einen Holz-Rahmenkörper 2100 und eine Rahmenblende 2200, welche hier aus einem Aluminium-Strangpreßprofil ausgebildet ist. Die Rahmenblende 2200 ist dabei in analoger Weise wie in der ersten Ausführungsform über einen Drehverbinder und eine Rahmenstelze demontierbar an den Rahmenkörper angekoppelt. Ferner ist zwischen dem Rahmenkörper 2100 und der Rahmenblende 2200 eine Dämmung 2600 angeordnet, welche ebenso wie in der ersten Ausführungsform aus Balsaholz, Kork, Pavatex oder dgl. ausgebildet sein kann. In besonderen Anforderungsfällen kann die Dämmung auch aus einem geschäumten Kunststoff wie Polystyrol etc. ausgebildet sein, um die gewünschten Dämmeigenschaften zu schaffen.

Der Flügel 300 weist dabei ebenfalls einen Holz-Flügelrahmen 3100 und eine Metall-Flügelblende 3200 auf, die wiederum in analoger Weise zur ersten Ausführungsform über eine Flügelstelze und einen Drehverbinder demontierbar miteinander verbunden sind. Dazwischen ist gleichermaßen eine Dämmung 3600 angeordnet. Auch in dieser Ausführungsform wird somit eine Verglasung 400 zwischen dem Flügelrahmen 3100 und der Flügelblende 3200 gehalten,.

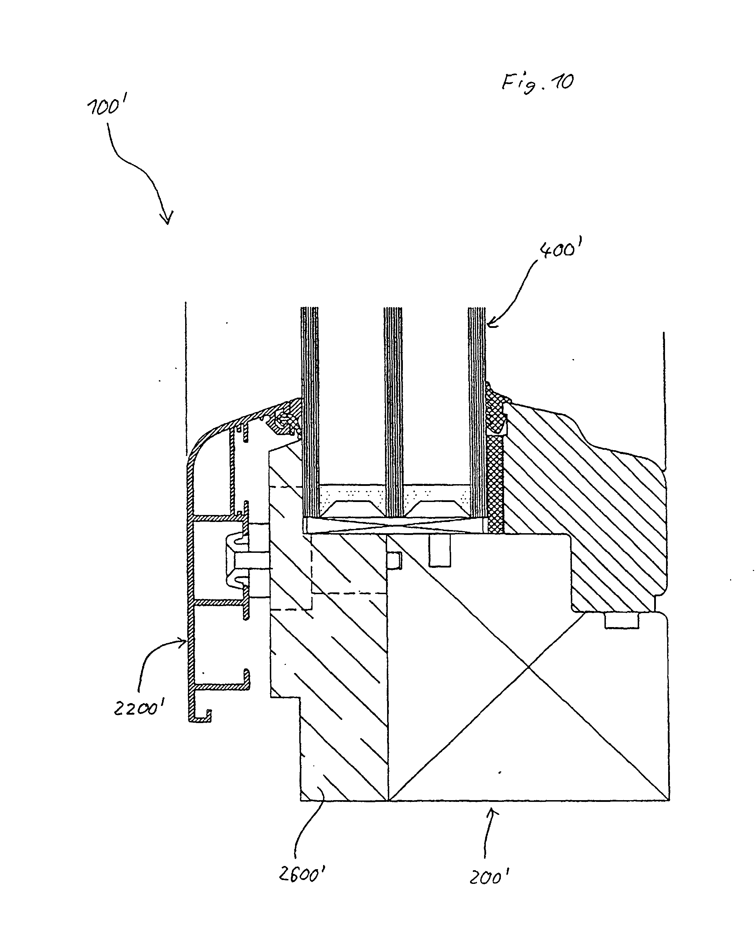

In Fig. 10 ist eine abgewandelte Ausführungsform dieser Bauweise gezeigt, wobei hier ein Fenster 100' flügellos ausgebildet ist, so daß eine Verglasung 400' an einem Rahmen 200' gehalten ist, der eine Rahmenblende 2200' und eine Dämmung 2600' aufweist. Die weiteren Elemente in dieser Ausführungsform sind im wesentlichen analog zu der in Fig. 5 gezeigten Bauweise.

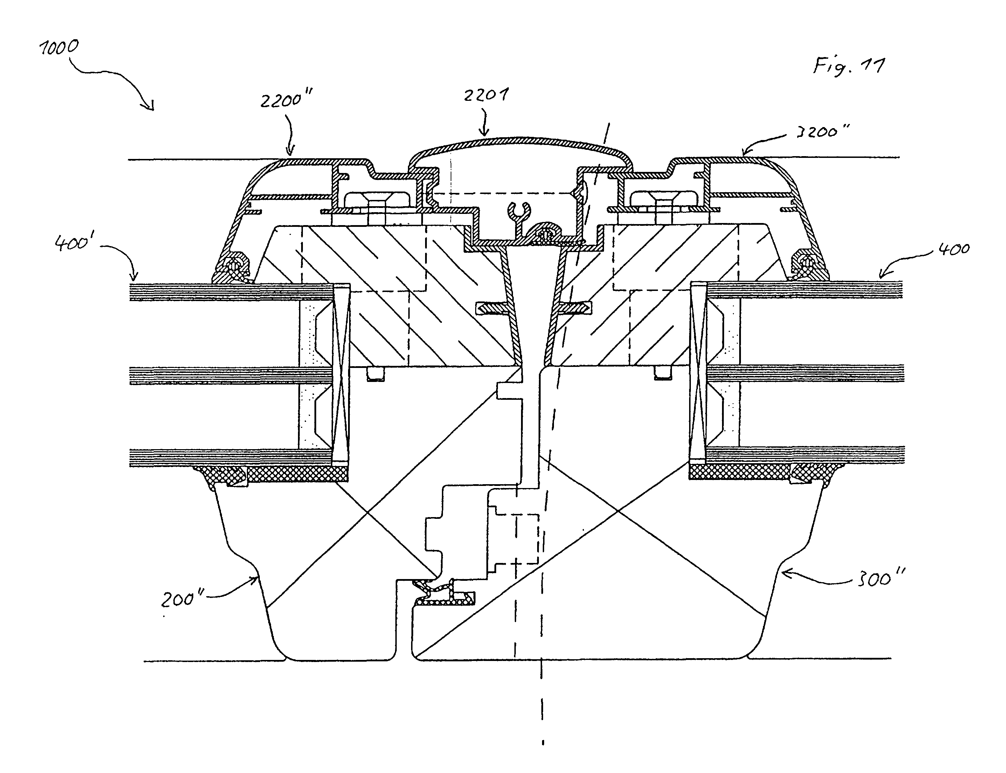

In Fig. 11 ist ferner noch eine Fensteranordnung 1000 gezeigt, wie sie beispielsweise in einem Wintergarten zum Einsatz kommt. Hier treffen zwei Fensterflügel derart aufeinander, daß ein Rahmen 200'' des einen Fensters auch als Anschlag für einen Flügelrahmen 300'' des anderen Fensters dient und zudem eine Verglasung 400' hält. Hierbei weist der Rahmen 200" eine Blende 2200'' auf, während der Flügelrahmen 300'' eine Flügelblende 3200'' enthält. Der Blende 2200'' ist ferner eine zusätzliche Blende 2201 zugeordnet, welche ebenfalls als Anschlag für den Flügelrahmen 300'' dient und einen außenseitigen Abschluß der Fensteranordnung 1000 herstellt. Diese Fensteranordnung 1000 läßt sich vollständig öffnen, d.h. es bleibt bei offenen Fensterflügeln kein Rahmenteil im Bereich zwischen diesen stehen. Hinsichtlich der weiteren Details entspricht diese Bauweise im wesentlichen den anderen Ausführungsformen.

Die Erfindung läßt neben der hier aufgezeigten Ausführungsform weitere Gestaltungsansätze zu.

So ist es auch möglich, die Erfindung an einem Fenster zu realisieren, bei dem entweder nur der Rahmen oder nur der Flügel mit einer Blende bzw. Dämmung ausgebildet ist.

Die Rahmen- bzw. Flügelstelzen 23 bzw. 33 durchgreifen jeweils Freiräume in der Dämmung 26 bzw. 36, welche vorab oder während der Montage ausgebildet werden, Hierbei ist die Dämmung möglichst ausfüllend um diese herum anzuordnen, damit keine Kältebrücken entstehen.

Die Rahmenstelze 23 und die Flügelstelze 33 können aus Kunststoff, Metall oder Holz ausgebildet sein.

Der Rahmen 2 und der Flügel 3 können auch aus Kunststoff oder Aluminium oder einer Kombination von Holz, Kunststoff und Aluminium ausgebildet sein. Insbesondere ist es auch möglich, die Rahmenblende 22 und die Flügelblende 32 aus Kunststoff oder Aluminium auszubilden und an Rahmenkörper 21 bzw. Flügelrahmen 31 aus Holz anzukoppeln.

Die Dämmung 26 bzw. 36 etc. kann auch aus einem anderen Material als Holzfasern ausgebildet sein. So können beispielsweise Balsaholz, Kork, Mineralfasern oder Kunststoffe wie Polyurethanschaum, Polystyrol etc. zum Einsatz kommen.

Auf die Nuten 25 bzw. 35 kann gegebenenfalls verzichtet werden, wobei dann jedoch ein erhöhter Montageaufwand erforderlich ist. Eventuell kann dieser Montageaufwand durch eine Lehre o.ä. gemindert werden. Anstelle der Nuten können zudem auch Sacklöcher treten.

Die Drehverbinder und die Stelzen können auch durch ein anderes Verbindungselement als eine Holzschraube am Rahmenkörper bzw. Flügelrahmen angekoppelt werden. Dies ist insbesondere dann der Fall, wenn diese aus einem anderen Material als Holz gebildet sind.

Die Stelzen 23 und 33 können auch ohne Haltebund ausgebildet sein, wenn die Dämmung 26 bzw. 36 auf andere Weise in ihrer Lage fixiert wird.

Ferner kann auch die Festlegung der Verglasung alleine durch die Haltekraft der Blende bzw. durch zusätzliche Glashalter bewerkstelligt werden.

Auf die Bereitstellung der Stabilisatoren kann gegebenenfalls verzichtet werden, wenn auch ohne diese eine ausreichende Stabilität der Anordnung erzielbar ist. Andererseits können die Stabilisatoren auch auf konstruktiv einfache Weise durch Schrauben etc. gebildet werden.

Die Ankopplung der Blenden kann auch mit anderen Mitteln als den beschriebenen Drehverbindern erfolgen, sofern eine Demontierbarkeit gegeben ist.

Ferner ist es auch möglich, die Schalbenschwanznuten für die Drehverbinder leicht schräg anzuordnen, wodurch sich ebenfalls eine Vorspannung zur Festlegung der Verglasung erzielen läßt.

Die Erfindung läßt sich zudem an jeder Art einer Fensteranordnung anwenden, das heißt jedem Aufbau, der mit einer Verglasung versehen ist. Der Begriff Fenster umfaßt daher auch Türverglasungen, Wintergartenelemente und ähnliches.

Das erfindungsgemäße Fenster kann durch die vorgesehene Dämmung zudem auch so ausgestaltet werden, daß eine Anwendung in einem breiten Einsatzgebiet von einem Niedrigenergiehaus bis zu einem Plus-Energiehaus möglich ist.

Die Erfindung schafft somit ein Fenster 1 mit demontierbaren Blenden, wodurch der Instandhaltungsaufwand gering gehalten werden kann. Zudem werden die Blenden auf Stelzen angeordnet, wodurch ein Freiraum zur Aufnahme einer Wärmedämmung vorliegt. Damit kann eine Fensteranordnung bereitgestellt werden, welche sich auch für eine Passivhaus-Bauweise eignet. Verwendet man für die Fensterelemente zudem ausschließlich Holzmaterialien, so kann auch eine ökologische Bauweise erzielt werden. Hierdurch ergibt sich der kombinatorische Effekt, daß der ökologische Baustoff Holz auch in einer Energiesparbauweise noch sinnvoller eingesetzt werden kann.

## Patentansprüche

1. Fenster (1; 1'; 100; 100') mit einem Rahmen (2; 2'; 200; 200') und einer Verglasung (4; 4'; 400; 400'), wobei der Rahmen (2; 2'; 200; 200') einen Rahmenkörper (21; 2100) und eine Rahmenblende (22; 22'; 2200; 2200') aufweist, welche demontierbar am Rahmenkörper (21; 2100) befestigt ist,
**dadurch gekennzeichnet,**
**daß** zwischen dem Rahmenkörper (21; 2100) und der Rahmenblende (22; 22'; 2200; 2200') eine Dämmung (26; 26'; 2600; 2600') angeordnet ist, wobei die Rahmenblende (22; 22'; 2200; 2200') auf einer Mehrzahl von Rahmenstelzen (23; 23') sitzt, welche die Dämmung (26; 26'; 2600; 2600') durchgreifen und sich am Rahmenkörper (21; 2100) abstützen.

2. Fenster (1; 100), insbesondere nach Anspruch 1, mit einem Rahmen und wenig-stens einem Flügel (3; 300) mit Verglasung (4; 400), wobei der wenigstens eine Flügel (3; 300) einen Flügelrahmen (31; 3100) und eine demontierbar daran befestigte Flügelblende (32; 3200) aufweist, **dadurch gekennzeichnet, daß** zwischen dem Flügelrahmen (31; 3100) und der Flügelblende (32; 3200) eine Dämmung (36; 3600) angeordnet ist, wobei die Flügelblende (32; 3200) auf einer Mehrzahl von Flügelstelzen (33) sitzt, welche die Dämmung (36; 3600) durchgreifen und sich am Flügelrahmen (31; 3100) abstützen.

3. Fenster nach Anspruch 1 oder 2, **dadurch gekennzeichnet, daß** die Verglasung (4) durch einen Haltebund (232, 333) an den Rahmen- bzw. Flügelstelzen (23, 33) festlegbar ist.

4. Fenster nach einem der Ansprüche 1 bis 3, **dadurch gekennzeichnet, daß** die Dämmung durch die Rahmen- bzw. Flügelstelzen (23, 33) festgelegt ist.

5. Fenster nach einem der Ansprüche 1 bis 4, **dadurch gekennzeichnet, daß** blendenseitig auf den Rahmen- bzw. Flügelstelzen (23, 33) Drehverbinder (24, 34) zur Ankopplung der Rahmen- bzw. Flügelblende (22, 32) angeordnet sind, wobei die Drehverbinder (24, 34) und die Rahmen- bzw. Flügelstelzen (23, 33) mittels eines gemeinsamen Verbindungselements, insbesondere einer Schraube, am Rahmenkörper bzw. Flügelrahmen (21, 31) befestigt sind.

6. Fenster nach einem der Ansprüche 1 bis 5, **dadurch gekennzeichnet, daß** der Rahmenkörper bzw. Flügelrahmen (21, 31) eine Nut (25, 35) aufweist, in welche die Rahmen- bzw. Flügelstelzen (23,33) eingreifen.

7. Fenster nach einem der Ansprüche 1 bis 6, **dadurch gekennzeichnet, daß** der Rahmenkörper bzw. Flügelrahmen (21, 31) aus Holz und die Rahmen- bzw. Flügelblende (22, 32) aus Holz, Aluminium oder Kunststoff ausgebildet ist.

8. Fenster nach einem der Ansprüche 1 bis 7, **dadurch gekennzeichnet, daß** die Dämmung (26, 36) im wesentlichen aus einem Holzwerkstoff wie Kork, Balsaholz oder Holzfasern besteht.

9. Fenster nach einem der Ansprüche 1 bis 8, **dadurch gekennzeichnet, daß** auf der der Verglasung (4) abgewandten Seite der Rahmen- bzw. Flügelstelze (23, 33) ein Stabilisator (28; 38) angeordnet ist, dessen Längserstreckung etwas größer als der durch die Rahmen- bzw. Flügelstelze (23, 33) vorgegebene wirksame Abstand zwischen dem Rahmenkörper bzw. Flügelrahmen (21, 31) und der Rahmen- bzw. Flügelblende (22, 32) ist.

## Claims

1. A window (1;1';100;100'), comprising a frame (2;2';200;200') and glazing (4;4';400;400'), wherein said frame (2;2';200;200') has a frame body (21;2100) and a frame trim (22;22';2200;2200'), wherein said frame trim is removable mounted on said frame body (21; 2100), **characterised in that** between said frame body (21;2100) and said frame trim (22;22';2200;2200') is provided an insulation (26;26';2600;2600'), wherein said frame trim (22;22';2200;2200') sits on a plurality of frame pins (23;23') which extend through said insulation (26;26';2600;2600') and are supported by said frame body (21;2100).

2. A window (1;100), in particular according to claim 1, comprising a frame and at least one wing (3;300) with glazing (4;400), wherein at least one wing (3;300) has a wing frame (31;3100) and a removably mounted wing trim (32; 3200), **characterised in that** an insulation (36;3600) is provided between said wing frame (31;3100) and said wing trim (32;3200), wherein said wing trim (32;3200) sits on a plurality of wing pins (33), which extend through the insulation (36;3600) and are supported by the wing frame (31;3100).

3. The window according to claim 1 or 2, **characterised in that** said glazing (4') is attachable to the frame pins or wing pins (23,33) by a mounting collar (232, 333).

4. The window according to any of claims 1 to 3, **characterised in that** said insulation is secured by the frame pins or the wing pins (22, 33).

5. The window according to any of claims 1 to 4, **characterised in that** on the trim side, the frame pins or wings pins (23,33) are provided with rotating connectors (24,34), for the coupling of the frame trim or wing trim (22,32), wherein said rotating connectors (24, 34) and said frame pins or wing pins (23,33) are connected to the frame body or wing frame (21,31) via a common connecting means, in particular a screw.

6. The window according to any of claims 1 to 5, **characterised in that** said frame body or wing frame (21,31) has a groove (25,35) into which the frame pins or wing pins (23,33) fit.

7. The window according to any of claims 1 to 6, **characterised in that** said frame body or wing frame (21, 31) is manufactured from wood and the frame trim or wing trim (22,32) is manufactured from a material selected from the group consisting of; wood, aluminium or synthetic material.

8. The window according to any of claims 1 to 7, **characterised in that** said insulation (26,36) is manufactured from a wood selected from the group consisting of: cork, balsawood, or wood fibres.

9. The window according to any of claims 1 to 8, **characterised in that** on the side of the frame pins or wing pins (23,33) facing away from the glazing (4) a stabiliser (28;38) is arranged, wherein the length of said stabiliser is slightly longer than the effective distance provided by the frame pins or wing pins (23,33) between the frame body or wing frame (21;31) and the frame trim or wing trim (22,32).

## Revendications

1. Fenêtre (1 ; 1' ; 100 ; 100') avec un cadre (2 ; 2' ; 200 ; 200') et un vitrage (4 ; 4'; 400 ; 400'), dans moyennant quoi le cadre (2 ; 2' ; 200 ; 200') comporte un corps de cadre (21 ; 2100) et un écran de cadre (22 ; 22' ; 2200 ; 2200') qui est fixé sur le corps de cadre (21 ; 2100) de manière démontable,
**caractérisé en ce que**
une isolation (26 ; 26' ; 2600 ; 2600') est disposée entre le corps de cadre (21 ; 2100) et l'écran de cadre (22 ; 22' ; 2200 ; 2200'), de telle manière que l'écran de cadre (22 ; 22' ; 2200 ; 2200') repose sur une pluralité de supports de cadre (23 ; 23') qui pénètrent dans l'isolation (26 ; 26' ; 2600 ; 2600') et qui s'appuient sur le corps de cadre (21 ; 2100).

2. Fenêtre (1 ; 100), en particulier selon la revendication 1, avec un cadre et au moins un battant (3 ; 300) avec un vitrage (4 ; 400), moyennant quoi le au moins un battant (3 ; 300) comporte un cadre de battant (31 ; 3100) et un écran de battant (32 ; 3200) démontable fixé dessus, **caractérisée en ce qu'**une isolation (36 ; 3600) est disposée entre le cadre de battant (31 ; 3100) et l'écran de battant (32 ; 3200), de telle manière que l'écran de battant (32 ; 3200) repose sur une pluralité de supports de battant (33) qui pénètrent dans l'isolation (36 ; 3600) et qui s'appuient sur le corps de battant (31 ; 3100).

3. Fenêtre selon la revendication 1 ou 2,
**caractérisée en ce que** le vitrage (4) peut être fixé aux supports de cadre ou de battant (23, 33) par un collier de support (232, 333).

4. Fenêtre selon l'une quelconque des revendications 1 à 3, **caractérisée en ce que** l'isolation est fixée par les supports de cadre ou de battant (23, 33).

5. Fenêtre selon l'une quelconque des revendications 1 à 4, **caractérisée en ce que**, du côté de l'écran, des attaches tournantes (24, 34) sont disposées sur les supports de cadre ou de battant (23, 33) pour le raccordement de l'écran de cadre ou de battant (22, 32), moyennant quoi les attaches tournantes (24, 34) et les supports de cadre ou de battant (23, 33) sont fixés sur le corps de cadre ou le cadre de battant (21, 31) à l'aide d'un élément de raccordement commun, en particulier une vis.

6. Fenêtre selon l'une quelconque des revendications 1 à 5, **caractérisée en ce que** le corps de cadre ou le cadre de battant (21, 31) comporte une rainure (25, 35) dans laquelle s'engagent les supports de cadre ou de battant (23, 33).

7. Fenêtre selon l'une quelconque des revendications 1 à 6, **caractérisée en ce que** le corps de cadre ou le cadre de battant (21, 31) est construit en bois et **en ce que** l'écran de cadre ou de battant (22, 32) est construit en bois, en aluminium ou en matière plastique.

8. Fenêtre selon l'une quelconque des revendications 1 à 7, **caractérisée en ce que** l'isolation (26, 36) est essentiellement constituée d'un matériau dérivé du bois tel que le liège, le bois de balsa ou les fibres de bois.

9. Fenêtre selon l'une quelconque des revendications 1 à 8, **caractérisée en ce que**, sur le côté des supports de cadre ou de battant (23, 33) opposé au vitrage (4), est monté un stabilisateur (28; 38) dont l'extension longitudinale est un peu plus grande que l'écart actif prédéterminé par les supports de cadre ou de battant (23, 33) entre le corps de cadre ou le cadre de battant (21, 31) et l'écran de cadre ou de battant (22, 32).
